# FASCICULE DE BREVET EUROPEEN

(11) **EP 0 540 396 B1**
(45) Date de publication et mention de la délivrance du brevet: **03.01.1996**
(21) Numéro de dépôt: 92402839.2
(22) Date de dépôt: 16.10.1992
(51) Int. Cl.: G01P 21/02, G01M 3/26

(54) **Banc d'essais anemometriques**
Windmessprüfstand
Anemometer test-bench

(30) Priorité: 18.10.1991 FR 9112893
(43) Date de publication de la demande: 05.05.1993
(73) Titulaire: AEROSPATIALE Société Nationale Industrielle, F-75781 Paris Cédex 16 (FR)
(72) Inventeur: Verdier, Christian, F-31840 Ausonne (FR); Nichelle, Guérino, F-31700 Cornebarrieu (FR)
(74) Mandataire: Poulin, Gérard

(56) Documents cités:
- GB-A- 2 049 954
- US-A- 3 593 567

## Description

L'invention concerne un banc d'essais anémométriques, conçu pour détecter et localiser des fuites éventuelles dans un circuit anémométrique d'aéronef et pour contrôler le bon étalonnage des indicateurs de l'aéronef reliés à ce circuit.

Les circuits anémométriques des aéronefs comportent des prises de pression statique et dynamique permettant d'acquérir des données de pression atmosphérique locales. Ces prises de pression sont reliées à différents indicateurs tels qu'un altimètre et un anémomètre, permettant respectivement au pilote de connaître l'altitude de l'aéronef, après un calibrage initial pour tenir compte des variations de la pression atmosphérique au sol, et la vitesse de l'aéronef par rapport à l'air ambiant.

Par souci de sécurité et de précision, chaque aéronef comporte généralement plusieurs prises de pression statique et plusieurs prises de pression dynamique, placées en différents endroits sur les faces extérieures de l'aéronef.

Les prises de pression statique sont constituées par des plaques au centre desquelles sont placés un ou plusieurs orifices de prise de pression. Un capteur comportant une capsule ou une membrane déformable permet de mesurer les variations de pression, qui sont transmises à un calculateur de bord soit directement, soit sous la forme de signaux électriques. Les prises de pression statique sont généralement placées dans la partie avant de l'aéronef.

Par ailleurs, les prises de pression dynamique sont constituées par des tubes orientés sensiblement parallèlement à l'axe longitudinal de l'aéronef et ouverts vers l'avant. Ces tubes débouchent sur des capteurs à capsule ou à membrane déformable semblables aux capteurs des prises dé pression statique. Ils sont généralement placés à l'avant de l'aéronef, dans une zone propice à la stabilité de l'écoulement fluide, c'est-à-dire hors turbulences et hors couche limite.

Lors de la fabrication des aéronefs, il est nécessaire de contrôler l'étanchéité de ces circuits anémométriques et de contrôler l'étalonnage des indicateurs de bord reliés à ces circuits. Ces contrôles peuvent aussi être effectués durant l'exploitation des aéronefs, à la demande des pilotes.

Actuellement, ces opérations sont réalisées au moyen d'appareils inadaptés aux besoins, en raison notamment de leur complexité, de leur difficulté de mise en oeuvre et de leur encombrement. De plus, aucun d'entre eux n'est conçu pour localiser une fuite éventuelle. Ces appareils d'essais peuvent être classés en deux catégorie.

Dans une première catégorie d'appareils d'essais anémométriques, les moyens de pompage servant à mettre en dépression les différentes prises de pression statique et dynamique de l'aéronef sont constitués par des pompes entraînées électriquement et intégrées à l'appareil. Tous les appareils d'essais existants appartenant à cette catégorie comportent des circuits électroniques complexes et des microprocesseurs pilotés par des logiciels visant à fournir une grande quantité d'informations, totalement inadaptées aux besoins. Au contraire, la quantité d'informations disponibles sur ces appareils constitue une source d'erreur lorsqu'ils sont utilisés par du personnel présentant une qualification insuffisante. De façon générale, la complexité des logiciels associés aux microprocesseurs utilisés dans ces appareils requiert du personnel extrêmement qualifié puisque leur mise en oeuvre nécessite à la fois une connaissance parfaite de l'appareil d'essais et du système à contrôler, ainsi que des notions de déroulement d'un programme informatique.

La complexité des appareils d'essais comportant des moyens de pompage intégrés rend ces appareils particulièrement volumineux. De ce fait, leur transport ne peut être fait qu'à l'aide d'un chariot et l'appareil lui-même doit rester à l'extérieur de l'aéronef pendant l'essai, ce qui nécessite de lui adjoindre un pupitre de commande séparé que les utilisateurs placent dans l'aéronef.

La deuxième catégorie d'appareils d'essais anémométriques existants se distingue par le fait qu'au lieu d'être intégrés à l'appareil et entraînés électriquement, les moyens de pompage sont placés à l'extérieur de. l'appareil et constitués par exemple par une pompe à main. Cet agencement, qui permet de réduire le volume et le poids par rapport à la première catégorie d'appareils cités, nécessite de la part des utilisateurs beaucoup de temps et des efforts physiques non négligeables, dans la plage de pression habituellement utilisée pour les essais. De plus, les appareils de cette catégorie ne peuvent pas servir à contrôler l'étalonnage des indicateurs de l'aéronef.

Par ailleurs, et comme on l'a déjà indiqué, aucun des appareils d'essais anémométriques existants n'est conçu pour permettre la localisation d'une fuite éventuelle dans le circuit anémométrique d'un aéronef. Par conséquent, si une fuite est détectée sur ce circuit, la localisation de cette fuite nécessite l'utilisation de pinces spéciales, au moyen desquelles les tuyaux servant à relier l'appareil à chacune des prises de pression statique et dynamique de l'aéronef peuvent être pincés à tour de rôle. Cela implique soit la présence de deux opérateurs, soit, dans le cas d'un opérateur unique, un va-et-vient de celui-ci entre l'appareil et les extrémités des tuyaux proches des prises de pression. En effet, si le pincement des tuyaux est effectué à proximité de l'appareil d'essais, il n'est pas possible de lever le doute entre une fuite du tuyau et une fuite de la partie du circuit anémométrique de l'aéronef adjacente à la prise de pression correspondante.

L'invention a précisément pour objet un banc d'essais anémométriques conçu pour permettre à un seul opérateur d'effectuer la détection et la localisation de fuites dans le circuit anémométrique d'un aéronef, ainsi que le contrôle du bon étalonnage des indicateurs de l'aéronef reliés à ce circuit anémométrique, ce banc d'essais étant en outre relativement léger et peu encombrant, de telle sorte qu'il peut être placé facilement à bord de l'aéronef en cours d'essais, et sa mise en oeuvre étant particulièrement simple et n'engendrant aucune perte de temps ni aucune dépense d'énergie de la part de l'opérateur.

Conformément à l'invention, ce résultat est obtenu au moyen d'un banc d'essais anémométriques, pour la détection et la localisation de fuites éventuelles dans un circuit anémométrique d'aéronef incluant au moins une prise de pression statique et au moins une prise de pression dynamique, et pour le contrôle du bon étalonnage des indicateurs de l'aéronef reliés à ce circuit, ce banc d'essais étant caractérisé par le fait qu'il comprend un appareil portable, des moyens d'alimentation électrique de cet appareil, deux tuyaux de liaison de l'appareil respectivement aux prises de pression statique et dynamique, incorporant un premier moyen d'isolement à commande électrique, pour chacune de ces prises de pression, et des câbles reliant électriquement chaque moyen d'isolement à l'appareil, ce dernier comprenant :
- des moyens de pompage entraînés électriquement ;
- un premier circuit pneumatique reliant les moyens de pompage au tuyau de liaison de l'appareil à la prise de pression statique, au travers de moyens de réglage et de moyens d'affichage d'une dépression dans ce premier circuit ;
- un deuxième circuit pneumatique reliant les moyens de pompage au tuyau de liaison de l'appareil à la prise de pression dynamique, au travers de moyens de réglage et de moyens d'affichage d'une surpression relative dans ce deuxième circuit, par rapport à ladite dépression ;
- des moyens de commutation permettant de faire passer le banc d'essais d'un mode de régulation et d'étalonnage, dans lequel les moyens de pompage sont actionnés et tous les premiers moyens d'isolement en position ouverte, à un mode de détection et de localisation de fuite, dans lequel les moyens de pompage sont au repos et l'un au moins des premiers moyens d'isolement en position fermée.

Avantageusement, les moyens de commutation comprennent un commutateur de mode apte à occuper le mode de régulation et d'étalonnage et un mode de détection de fuite, dans lequel tous les premiers moyens d'isolement sont en position fermée, et un commutateur individuel permettant de fermer chacun des premiers moyens d'isolement lorsque le commutateur de mode occupe le mode de régulation et d'étalonnage.

Dans ce cas, des deuxièmes moyens d'isolement à commande électrique sont placés, de préférence, dans chacun des premier et deuxième circuits pneumatiques entre les moyens de réglage et les moyens d'affichage, ces deuxièmes moyens d'isolement étant en position ouverte lorsque le commutateur de mode occupe le mode de régulation et d'étalonnage, et en position fermée lorsque le commutateur de mode occupe le mode de détection de fuite.

Afin que les moyens d'affichage du deuxième circuit pneumatique visualisent la différence entre la pression dynamique régnant dans le deuxième circuit et la pression statique régnant dans le premier circuit, ces moyens d'affichage sont reliés au premier circuit pneumatique par l'intermédiaire d'un troisième moyen d'isolement à commande électrique, servant à éviter lors de la détection de fuite qu'une fuite dans l'un des circuits pneumatiques ne se répercute dans l'autre circuit. A cet effet, ce troisième moyen d'isolement se trouve en position ouverte lorsque le commutateur de mode occupe le mode de régulation et d'étalonnage et en position fermée lorsque ce commutateur de mode occupe le mode de détection de fuite.

Les moyens de pompage comprennent une première pompe, fonctionnant en aspiration, à laquelle est associée une deuxième pompe, fonctionnant en refoulement, lorsqu'on désire pouvoir faire des essais simulant le déplacement de l'aéronef au sol ou à très faible altitude. A cette deuxième pompe sont alors associés des moyens de détection d'un seuil haut de pression statique, de telle sorte que la deuxième pompe n'est actionnée, lorsque les moyens de commutation occupent le mode de régulation et d'étalonnage, qu'au-dessus de ce seuil.

La deuxième pompe est avantageusement reliée au premier et au deuxième circuits pneumatiques au travers d'un quatrième moyen d'isolement, à commande électrique, qui se trouve en position ouverte lorsque la deuxième pompe est actionnée et en position fermée lorsque la deuxième pompe n'est pas actionnée.

De préférence, afin d'éviter tout risque de simulation d'une vitesse négative de l'aéronef tout en garantissant une grande précision dans les mesures effectuées, le premier circuit pneumatique est raccordé directement sur la première pompe, le deuxième circuit pneumatique étant raccordée au premier circuit pneumatique, en aval des moyens de réglage de ce premier circuit, au travers d'un moyen de dérivation à commande électrique, lorsque la pression dynamique franchit un premier seuil dans le sens de la descente et un deuxième seuil dans le sens de la montée, et le deuxième circuit pneumatique étant raccordé directement à la première pompe, au travers dudit moyen de dérivation, lorsque la pression dynamique franchit le premier seuil dans le sens de la montée et le deuxième seuil dans le sens de la descente.

Enfin, afin d'améliorer encore l'utilisation pratique du banc d'essais conforme à l'invention, les moyens d'alimentation électriques de l'appareil comprennent avantageusement un câble apte à être raccordé sur une source de courant de l'aéronef.

On décrira à présent, à titre d'exemple non limitatif, un mode de réalisation préféré de l'invention, en se référant aux dessins annexés, dans lesquels :
- la figure 1 est une vue de dessus illustrant schématiquement l'utilisation d'un banc d'essais anémométriques conforme à l'invention pour assurer la détection et la localisation de fuites éventuelles dans le circuit anémométrique d'un avion, ainsi que le contrôle du bon étalonnage des indicateurs de cet avion ;
- la figure 2 est une vue de dessus représentant la face avant de l'appareil portable constituant l'élément essentiel du banc d'essais anémométriques conforme à l'invention ; et
- la figure 3 illustre de façon schématique les circuits pneumatiques et électriques internes à l'appareil dont la face avant est illustrée sur la figure 2.

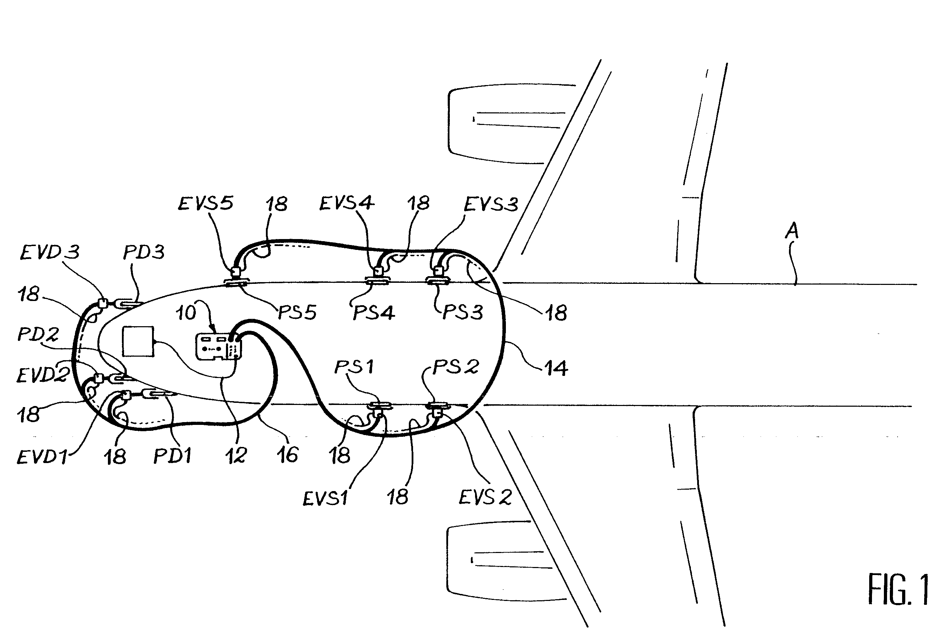

On a représenté en A sur la figure 1 la silhouette d'un avion, dont on désire contrôler l'étanchéité du circuit anémométrique et, le cas échéant, le bon étalonnage des indicateurs reliés à ce circuit. Ces essais sont effectués de façon systématique en fin de fabrication. Exceptionnellement, un essais d'étanchéité et/ou un contrôle d'étalonnage peuvent aussi être effectués, à la demande d'un pilote, durant la vie de l'avion.

Sur la figure 1, on a désigné par les références PS1 à PS5 les prises de pression statique de l'avion A et par PD1 à PD3 les prises de pression dynamique de cet avion. Le nombre et l'agencement de ces prises ne sont donnés qu'à titre d'exemples puisqu'ils varient selon le type d'avion considéré.

Les capteurs associés à chacune des prises de pression statique PS1 à PS5 délivrent un signal pneumatique ou électrique qui est transmis au calculateur de bord de l'avion. Le pilote introduit également dans ce calculateur la valeur de la pression atmosphérique au sol, indiquée par la tour de contrôle. A partir de ces deux informations, le calculateur détermine l'altitude à laquelle se trouve l'avion et cette altitude est affichée sur un altimètre équipant le tableau de bord de l'avion.

Par ailleurs, les capteurs (non représentés) associés à chacune des prises de pression dynamique PD1 à PD3 délivrent des signaux de pression ou des signaux électriques représentatifs de la vitesse de l'avion par rapport à l'air ambiant. Ces signaux sont également introduits dans le calculateur de bord de l'avion, qui affiche sur l'anémomètre cette vitesse de l'avion par rapport à l'air ambiant.

Comme l'illustre très schématiquement la figure 1, les essais d'étanchéité de la partie pneumatique du circuit anémométrique de l'avion ainsi que le contrôle du bon étalonnage de l'altimètre et de l'anémomètre sont effectués, conformément à l'invention, au moyen d'un banc d'essais anémométriques comportant principalement un appareil portable 10 dont les éléments constitutifs seront décrits en détail par la suite. Cet appareil 10 est prévu pour être alimenté électriquement par la source de courant de l'avion A, au travers d'un câble d'alimentation électrique 12. Lorsque l'appareil portable 10 est placé à bord de l'avion pour effectuer les essais et les contrôles souhaités, ce câble 12 est branché sur une prise 28 V située dans le poste de pilotage de l'avion, comme le montre schématiquement la figure 1. Il est à noter que cette tension ne constitue pas une limitation, la tension de 115 V, 400 Hz de l'avion, ou celle du secteur au sol, 220 V, 50Hz pouvant également être utilisées, selon les disponibilités.

Le banc d'essais anémométriques conforme à l'invention comprend de plus un premier tuyau 14, par lequel l'appareil 10 est relié à chacune des prises de pression statique PS1 à PS5 de l'avion, ainsi qu'un deuxième tuyau 16 par lequel l'appareil 10 est relié à chacune des prises de pression dynamique PD1 à PD3 de l'avion.

De façon plus précise, le tuyau 14 comporte, pour chacune des prises de pression statique PS1 à PS5, une dérivation terminée par un adaptateur prévu pour être fixé de façon étanche sur la prise de pression statique correspondante, d'une manière en elle-même connue. Une électrovanne EVS1 à EVS5 est placée dans chacune de ces dérivations du tuyau 14, à proximité immédiate de l'adaptateur.

De façon comparable, le deuxième tuyau 16 est raccordé de façon étanche sur chacune des prises de pression dynamique PD1 à PD3 par un adaptateur de structure connue, placé à l'extrémité d'une dérivation de cette tuyauterie 16. Une électrovanne EVD1 à EVD3 est placée dans chacune de ces dérivations, à proximité immédiate de l'adaptateur correspondant.

Afin d'assurer la commande de chacune des électrovannes EVS1 à EVS5 et EVD1 à EVD3 depuis l'appareil portable 10, chacune de ces électrovannes est reliée à l'appareil 10 par un câble de liaison électrique cheminant le long du tuyau 14 ou 16 correspondant. Ces différents câbles de liaison électriques, qui ne sont représentés que dans leur partie proche des électrovannes sur la figure 1, sont tous désignés par la référence 18.

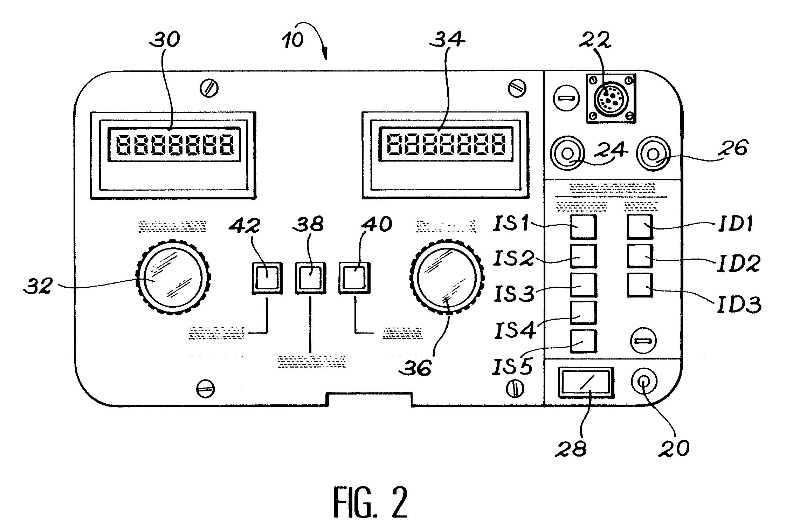

On décrira à présent, en se référant à la figure 2, la face avant de l'appareil portable 10 du banc d'essais anémométriques selon l'invention, sur laquelle sont regroupés la prise de raccordement des câbles 18, les raccords de fixation des tuyaux 14 et 16, les organes de commande et de réglage du banc, et les indicateurs.

Ainsi, on trouve en bas et à droite de cette face avant un passage 20 pour le câble d'alimentation électrique 12 et, en haut et à droite de cette même face avant, une prise multiple 22 sur laquelle est raccordé un connecteur (non représenté) relié à chacun des câbles électriques 18.

Immédiatement en dessous de la prise multiple 22, sont placés deux raccords pneumatiques 24 et 26 sur lesquels peuvent être fixés des raccords complémentaires (non représentés), associés respectivement à la première tuyauterie 14 et à la deuxième tuyauterie 16.

On trouve également sur la face avant de l'appareil portable 10, à côté du passage 20, un interrupteur électrique général marche/arrêt 28 et, entre le raccord 24 et cet interrupteur 28, une rangée de cinq interrupteurs IS1 à IS5 servant à commander respectivement chacune des électrovannes EVS1 à EVS5. Trois autres interrupteurs ID1 à ID3 sont placés entre le raccord 26 et le passage 20, pour commander respectivement chacune des électrovannes EVD1 à EVD3.

La partie gauche de la face avant de l'appareil portable 10 est essentiellement occupée par un indicateur numérique de pression absolue 30, sous lequel est placé le bouton de réglage 32 d'un premier régulateur de pression que l'on appellera par la suite régulateur de pression statique.

Dans sa partie centrale, la face avant de l'appareil portable 10 comporte un indicateur numérique de pression différentielle 34, en dessous duquel est placé le bouton de réglage 36 d'un deuxième régulateur de pression que l'on appellera par la suite régulateur de pression dynamique.

Enfin, la face avant de l'appareil portable 10 comporte également un sélecteur de mode ou de fonction comprenant trois boutons poussoir 38, 40 et 42, placés entre les boutons de réglage 32 et 36 des régulateurs de pression. L'enfoncement du bouton poussoir 38 a pour effet de placer le banc d'essais dans un mode de régulation et d'étalonnage. L'enfoncement du bouton poussoir 40 permet quant à lui de placer le banc d'essais dans un mode de détection de fuite, dans lequel toutes les électrovannes EVS1 à EVS5 et EVD1 à EVD3 sont fermées simultanément. Enfin, l'enfoncement du bouton poussoir 42 place le banc d'essais dans un mode d'arrêt de la régulation, tout en gardant les indicateurs opérationnels et en assurant la remontée progressive de la pression dans les circuits jusqu'à la pression atmosphérique ambiante sans risquer d'endommager les prises de pression de l'aéronef, dans le cas où l'opérateur n'aurait pas effectué cette remontée à l'aide des boutons 32 et 36.

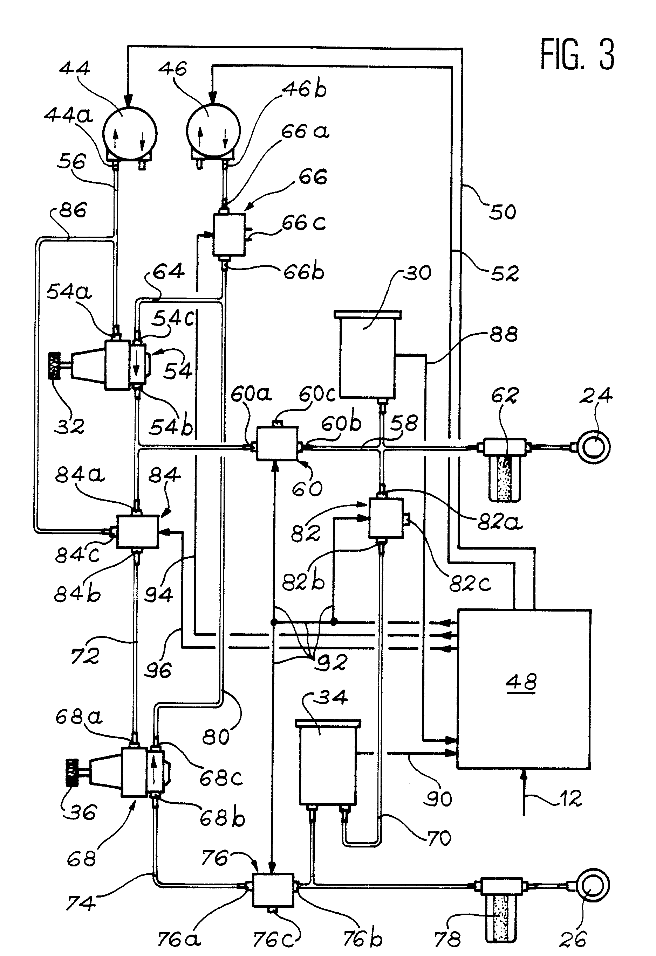

On décrira à présent les différents organes contenus dans l'appareil portable 10, ainsi que les circuits pneumatiques et électriques associés, en se référant à la figure 3.

L'appareil portable 10 illustré sur les figures comprend tout d'abord une première pompe 44, fonctionnant en aspiration et une deuxième pompe 46, fonctionnant au refoulement. Chacune de ces pompes 44 et 46 peut notamment être constituée par une pompe à membrane entraînée électriquement selon les ordres de commande émis par un boîtier électronique 48 et transmis respectivement à la pompe 44 et à la pompe 46 par des conducteurs électriques 50 et 52.

L'orifice d'aspiration 44a de la pompe 44 est raccordé sur un premier circuit pneumatique, relié par son extrémité opposée au raccord 24 placé sur la face avant de l'appareil. Ce premier circuit pneumatique a pour fonction de simuler une altitude donnée, en engendrant sur les prises de pression statique et dynamique de l'avion une dépression correspondant à cette altitude. A cet effet, il comprend le régulateur de pression statique 54 dont le bouton de manoeuvre 32 est placé sur la face avant de l'appareil, ainsi que l'indicateur de pression absolue 30.

De façon plus précise, une tuyauterie 56 relie l'orifice d'aspiration 44a de la pompe 44 à un premier orifice d'entrée 54a du régulateur de pression statique 54. Par ailleurs, un orifice de sortie 54b de ce régulateur 54 communique avec le raccord 24 par une tuyauterie 58 sur laquelle est branché en dérivation l'indicateur de pression absolue 30.

Une électrovanne 60 ainsi qu'un filtre 62 sont en outre placés dans la tuyauterie 58, respectivement en amont et en aval de l'indicateur de pression absolue 30. Lorsque l'électrovanne 60 n'est pas excitée, son orifice d'entrée 60a est isolé de son orifice de sortie 60b et communique avec un orifice d'évacuation 60c obturé par un bouchon. L'excitation de l'électrovanne 60 a pour effet de faire communiquer les orifices 60a et 60b, tout en les isolant de l'orifice d'évacuation 60c.

Le filtre 62 est un filtre à cartouche interchangeable, servant notamment à éliminer la vapeur d'eau présente dans ce circuit pneumatique.

Le régulateur de pression statique 54 comporte également un deuxième orifice d'entrée 54c, qui communique avec l'orifice de refoulement 46b de la pompe 46 par une tuyauterie 64 dans laquelle est placée une électrovanne 66.

Lorsque cette électrovanne 66 est au repos, son orifice de sortie 66b est isolé de son orifice d'entrée 66a et communique avec un orifice d'évacuation ouvert 66c. Au contraire, lorsque l'électrovanne 66 est excitée, les orifices d'entrée 66a et de sortie 66b communiquent entre eux et sont isolés de l'orifice d'évacuation ouvert 66c.

L'appareil portable 10 comprend en outre un deuxième circuit pneumatique reliant les pompes 44 et 46 au raccord 26 servant au branchement du tuyau 16 prévu pour être relié aux prises de pression dynamique de l'avion.

Ce deuxième circuit pneumatique a pour fonction de simuler une vitesse donnée, en appliquant sur les prises de pression dynamique de l'avion une surpression relative correspondant à cette vitesse, par rapport à la dépression engendrée par le premier circuit.

Ce deuxième circuit pneumatique comporte, en série, le régulateur de pression dynamique 68 dont le bouton de manoeuvre 36 apparaît sur la face avant de l'appareil 10, ainsi que l'indicateur de pression différentielle 34. Plus précisément, l'indicateur 34 est monté en dérivation sur ce circuit et relié au premier circuit pneumatique, au niveau de l'indicateur de pression statique 30, par une canalisation 70.

Afin d'éviter que la pression engendrée par le régulateur 68 ne corresponde à une dépression plus importante que celle qui est engendrée dans le premier circuit pneumatique, le premier orifice d'entrée 68a du régulateur 68 est relié à l'orifice de sortie 54b du régulateur 54 par une canalisation 72. Par ailleurs, l'orifice de sortie 68b du régulateur 68 est relié au raccord 26 par une canalisation 74, sur laquelle sont placés, respectivement en amont et en aval de l'indicateur de pression différentielle 34, une électrovanne 76 et un filtre 78.

Le fonctionnement de l'électrovanne 76 est comparable à celui de l'électrovanne 60 située dans le premier circuit. Plus précisément, lorsque l'électrovanne 76 est au repos, son orifice d'entrée 76a est isolé de son orifice de sortie 76b et communique avec un orifice d'évacuation 76c obturé par un bouchon. L'excitation de l'électrovanne 76 a pour effet de faire communiquer entre eux les orifices d'entrée 76a et de sortie 76b et de les isoler de l'orifice d'évacuation 76c.

Le filtre 78 a, par ailleurs, la même fonction que le filtre 62 et contient, comme ce dernier, une cartouche interchangeable.

Le régulateur de pression dynamique 68 comporte également un deuxième orifice d'entrée 68c qui communique avec l'orifice de refoulement 46b de la pompe 46, au travers de l'électrovanne 66, par une canalisation 80 raccordée sur la canalisation 64, en aval de l'électrovanne 66.

Pour compléter la description des circuits pneumatiques représentés sur la figure 3, on observera qu'une électrovanne d'isolement 82 est également placée dans la canalisation 70 qui relie les deux indicateurs de pression 30 et 34. Au repos, l'orifice d'entrée 82a de cette électrovanne d'isolement est isolé de l'orifice de sortie 82b et communique avec un orifice d'évacuation 82c obturé par un bouchon. L'excitation de l'électrovanne 82 a pour effet de faire communiquer les orifices d'entrée 82a et de sortie 82b et de les isoler de l'orifice d'évacuation 82c.

Enfin, une électrovanne 84 est également placée dans la canalisation 72, entre les régulateurs de pression 54 et 68. Au repos, les orifices d'entrée 84a et de sortie 84b de cette électrovanne 84, sur lesquels sont branchées les parties amont et aval de la canalisation 72, communiquent entre eux et sont isolés d'un deuxième orifice d'entrée 84c. Une canalisation 86 est branchée en dérivation sur la canalisation 56, entre la pompe 44 et le régulateur de pression statique 54, et raccordée sur le deuxième orifice d'entrée 84c de l'électrovanne 84. Lorsque cette électrovanne 84 est excitée, c'est au contraire l'orifice d'entrée 84c qui communique avec l'orifice de sortie 84b, alors que l'orifice d'entrée 84a est isolé des deux autres orifices.

Comme l'illustre schématiquement la figure 3, le boîtier électronique 48 est alimenté en courant électrique par le câble 12 et il assure directement l'alimentation électrique des pompes 44 et 46 par les conducteurs électriques 50 et 52. En outre, le boîtier électronique 48 reçoit en permanence, par l'intermédiaire de deux conducteurs électriques 88 et 90, des signaux électriques représentatifs de la pression statique détectée par l'indicateur de pression absolue 30 et de la différence de pression détectée par l'indicateur de pression différentielle 34. Ces signaux électriques sont fournis par des capteurs (non représentés), qui peuvent éventuellement être incorporés aux indicateurs.

Le boîtier électronique 48 assure également la commande simultanée des électrovannes 60, 76 et 82 par des conducteurs électriques 92, ainsi que la commande des électrovannes 66 et 84, respectivement par des conducteurs électriques 94 et 96.

Plus précisément, les électrovannes 60, 76 et 82 sont ouvertes lorsque l'appareil est en mode de régulation et d'étalonnage ou en mode d'arrêt régulation, alors qu'elles sont fermées lorsque l'appareil est en mode de détection et localisation de fuite.

Par ailleurs, l'électrovanne 66 est ouverte et la pompe 46 actionnée lorsque la pression absolue est supérieure à un seuil de pression voisin de la pression atmosphérique, l'électrovanne 66 étant fermée et la pompe 46 arrêtée dans le cas contraire.

Enfin, l'électrovanne 84 interrompt la communication entre les orifices 84b et 84c lorsque la pression différentielle dans le deuxième circuit s'abaisse au-dessous d'un seuil donné, pour faire communiquer les orifices 84a et 84b, et rétablit la communication entre les orifices 84b et 84c lorsque cette pression différentielle s'élève au-dessus d'un second seuil, distinct du précédent.

Le boîtier 48 inclut à cet effet trois détecteurs de seuil.

La mise en oeuvre du banc d'essais anémométriques conforme à l'invention va à présent être décrite, dans le cadre du mode de réalisation qui vient d'être décrit en se référant aux figures 1 à 3.

Lorsqu'un opérateur désire contrôler l'étanchéité des circuits anémométriques d'un avion et/ou le bon étalonnage des instruments de bord tels que L'altimètre et l'anémomètre liés à ce circuit, il place l'appareil portable 10 à bord de l'avion de la manière illustrée sur la figure 1. L'opérateur branche ensuite le câble d'alimentation électrique 12 sur la prise 28 V prévue à cet effet dans le poste de pilotage de l'avion et il raccorde les tuyaux 14 et 16 sur les raccords 24 et 26 prévus sur la face avant de l'appareil 10. Simultanément, il branche le connecteur relié aux conducteurs électriques 18 sur la prise multiple 22. Enfin, l'opérateur termine les branchements en allant raccorder chacun des adaptateurs portés par les tuyaux 14 et 16 sur les différentes prises de pression statique PS1 à PS5 et dynamique PD1 à PD3.

L'opérateur actionne ensuite le commutateur 28 pour assurer la mise en route de l'appareil.

Dans un premier temps, le commutateur de mode est placé en mode de régulation et d'étalonnage en pressant le bouton poussoir 38. Cela se traduit immédiatement par l'excitation des électrovannes 60, 66, 76 et 82 et par la mise en oeuvre des pompes 40 et 46. L'opérateur actionne alors le bouton de manoeuvre 32 du régulateur de pression statique 54, afin d'engendrer dans les deux circuits pneumatiques de l'appareil et dans les tuyaux 14 et 16 qui sont reliés à ces circuits par les raccords 24 et 26 une dépression dont la valeur s'affiche sur l'indicateur de pression absolue 30.

Le boîtier électronique 48 comprend un premier détecteur de seuil, sensible à la valeur de la pression statique fournie par l'indicateur 30 au travers du conducteur électrique 88, pour stopper la pompe 46 et exciter l'électrovanne 66, dès que la pression statique atteint un seuil légèrement inférieur à la pression atmosphérique (par exemple, environ 850 mB). La pompe 46 a en effet pour seule fonction de permettre l'application d'une pression positive sur les prises de pression dynamique de l'avion dans le cas d'un essai simulé au sol ou à très basse altitude. Si un tel essais n'est jamais demandé, il est à noter que la pompe 46, les canalisations 64 et 80, et l'électrovanne 66 peuvent être supprimées.

Lorsque la pression statique correspondant à l'altitude pour laquelle on désire faire le contrôle est affichée sur l'indicateur 30, l'opérateur cesse de tourner le bouton 32 du régulateur 54. Les différentes prises de pression statique et dynamique de l'avion reçoivent alors une pression statique correspondant à cette valeur affichée, au travers des deux circuits pneumatiques de l'appareil 10.

L'opérateur actionne ensuite le bouton 36 du régulateur 68 de pression différentielle, de façon à simuler dans la canalisation 74 et dans le tuyau 16 raccordé sur cette canalisation une surpression par rapport à la pression statique négative engendrée précédemment dans les deux circuits, afin de simuler l'altitude de l'avion. Cette surpression est affichée sur l'indicateur 34 et réglée à la valeur désirée en agissant sur le bouton 36.

Comme on l'a déjà mentionné, le boîtier électronique 48 inclut deux détecteurs de seuil sensibles àla différence de pression ou à la surpression relative mesurée par l'indicateur 34 et transmise par le conducteur électrique 90, servant à commander l'excitation de l'électrovanne 84 lorsque cette différence de pression dépasse un seuil donné lors de l'augmentation de la pression et atteint un autre seuil lors de la diminution de la pression. Cet agencement permet d'éviter la simulation d'une vitesse négative sur le banc d'essais, tout en supprimant par ailleurs tout effet de battement dans le second circuit pneumatique, dû au décalage entre les temps de réponse électroniques et pneumatiques.

Lorsque les valeurs de pression lues sur les indicateurs 30 et 34 correspondent respectivement à l'altitude et à la vitesse pour lesquelles on a choisi d'effectuer le contrôle, la vérification du bon étalonnage des instruments de bord s'effectue à l'aide d'abaques dépendant du type d'avion en essais, donnant pour chaque valeur de la pression absolue et de la pression différentielle affichée sur l'appareil les valeurs d'altitude et de vitesse correspondantes. Différentes valeurs de pression absolue et de pression différentielles peuvent être affichées successivement à cet effet sur les indicateurs 30 et 34. Si une anomalie d'étalonnage est détectée, les instruments sont réglés, si leur conception le permet, ou remplacés.

Il est à noter que les électrovannes 60, 76 et 82 restent ouvertes quelles que soient les pressions, lorsque l'appareil est en mode de régulation et d'étalonnage.

Afin d'effectuer le contrôle d'étanchéité des circuits anémométriques de l'avion, l'opérateur appuie ensuite sur le bouton poussoir 40, permettant de faire passer l'appareil 10 en mode de détection de fuites. L'actionnement du bouton poussoir 40 a immédiatement pour effet de désexciter les électrovannes 60, 76 et 82. Cet actionnement a aussi pour effet d'exciter simultanément toutes les électrovannes EVS1 à EVS5 et EVD1 à EVD3, afin de les fermer. Le circuit anémométrique de l'avion est ainsi totalement isolé du banc d'essais.

Dans ces conditions, l'opérateur laisse s'écouler un temps prédéterminé, par exemple d'environ 20 minutes. Si les informations fournies par les indicateurs de l'avion restent inchangées ou n'ont varié que d'une très faible valeur restant à l'intérieur d'une marge de tolérance prédéterminée, on considère que le circuit anémométrique de l'avion est satisfaisant et ne présente pas de fuite.

Dans le cas contraire, le circuit présente une ou plusieurs fuites et celles-ci peuvent alors être localisées en fermant toutes les électrovannes statiques EVS1 à EVS5 et dynamiques EVD1 à EVD3, puis en les ouvrant à tour de rôle, en agissant sur les interrupteurs correspondant IS1 à IS5 et ID1 à ID3 prévus sur la face avant de l'appareil 10. Lorsque la partie du circuit anémométrique de l'avion correspondant à l'électrovanne ouverte comporte une fuite, une variation de la pression affichée sur l'indicateur correspondant 30 ou 34 apparaît immédiatement.

Au cours de ce contrôle, l'électrovanne 82 permet d'éviter qu'une fuite apparaissant sur l'un des circuits pneumatiques ne soit répercutée sur l'autre circuit pneumatique.

Lorsque le contrôle et la détection de fuite sont terminés, l'opérateur appuie sur le bouton poussoir 38, ramène, par le bouton 32, la pression du banc à la pression ambiante, puis appuie sur le bouton poussoir 42, pour faire passer le banc d'essais en mode d'arrêt régulation. Cela a pour effet de rouvrir toutes les électrovannes 60, 76 et 82, ainsi que les électrovannes extérieures EVS1 à EVS5 et EVD1 à EVD3, et de faire remonter progressivement la pression dans les circuits, si l'opérateur n'a pas effectué de remontée par le bouton 32. Cette remontée est assurée par le boîtier électronique 48, afin qu'elle reste suffisamment lente pour ne pas endommager les capteurs associés aux prises de pression statique et dynamique de l'avion.

Il est à noter que l'appareil portable 10 peut être utilisé avec des tuyaux 14 et 16 non équipés d'électrovannes. Le contrôle de l'étanchéité du circuit anémométrique de l'avion peut alors être fait sur les indicateurs 30 et 34 de l'appareil, grâce à la fermeture des électrovannes 60, 76 et 82 en mode de détection de fuite. En revanche, il n'est plus possible dans ce cas de localiser la fuite. Bien entendu, l'absence d'électrovannes dans les tuyaux 14 et 16 n'empêche pas d'effectuer l'étalonnage des indicateurs de l'aéronef, de la manière décrite précédemment.

La description qui précède fait apparaître que le banc d'essais selon l'invention permet d'effectuer le contrôle de l'étanchéité des circuits anémométriques des avions, la localisation de fuites éventuelles dans ces circuits, ainsi que le contrôle du bon étalonnage des indicateurs de l'aéronef d'une manière particulièrement simple. En outre, ce contrôle peut être effectué facilement par une seule personne, disposant d'une qualification limitée, et sans que cette personne n'ait à accomplir des efforts physiques particuliers. Enfin, le poids, l'encombrement et le prix de l'appareil portable qui constituent l'élément essentiel du banc d'essais sont particulièrement faibles.

## Revendications

1. Banc d'essais anémométriques, pour la détection et la localisation de fuites éventuelles dans un circuit anémométrique d'aéronef incluant au moins une prise de pression statique (PS1 à PS5) et au moins une prise de pression dynamique (PD1 à PD3), et pour le contrôle du bon étalonnage des indicateurs de l'aéronef reliés à ces circuits, ce banc d'essais étant caractérisé par le fait qu'il comprend un appareil portable (10), des moyens d'alimentation électrique (12) de cet appareil, deux tuyaux (16, 18) de liaison de l'appareil respectivement aux prises de pression statique et dynamique, incorporant un premier moyen d'isolement (EVS1 à EVS5 ; EVD1 à EVD3), à commande électrique, pour chacune de ces prises de pression, et des câbles (18) reliant électriquement chaque moyen d'isolement à l'appareil, ce dernier comprenant :
- des moyens de pompage (44, 46) entraînés électriquement ;
- un premier circuit pneumatique reliant les moyens de pompage au tuyau (14) de liaison de l'appareil à la prise de pression statique, au travers de moyens de réglage (54) et de moyens d'affichage (30) d'une dépression dans ce premier circuit ;
- un deuxième circuit pneumatique reliant les moyens de pompage au tuyau (16) de liaison de l'appareil à la prise de pression dynamique au travers de moyens de réglage (68) et de moyens d'affichage (34) d'une surpression relative dans ce deuxième circuit, par rapport à ladite dépression ;
- des moyens de commutation (38, 40, 42 ; IS1 à IS5 ; ID1 à ID3) permettant de faire passer le banc d'essais d'un mode de régulation et d'étalonnage, dans lequel les moyens de pompage sont actionnés et tous les premiers moyens d'isolement en position ouverte, à un mode de détection et de localisation de fuite, dans lequel les moyens de pompage sont au repos et l'un au moins des premiers moyens d'isolement en position fermée.

2. Banc d'essais selon la revendication 1, caractérisé par le fait que les moyens de commutation comprennent un commutateur de mode (38, 40, 42) apte àoccuper le mode de régulation et d'étalonnage et un mode de détection de fuite, dans lequel tous les premiers moyens d'isolement sont en position fermée, et un commutateur individuel (IS1 à IS5, ID1 à ID3) permettant de fermer chacun des premiers moyens d'isolement lorsque le commutateur de mode occupe le mode de régulation et d'étalonnage.

3. Banc d'essais selon la revendication 2, caractérisé par le fait que des deuxièmes moyens d'isolement (60, 76) à commande électrique, sont placés dans chacun des premier et deuxième circuits pneumatiques, entre les moyens de réglage (54, 68) et les moyens d'affichage (30, 34), ces deuxièmes moyens d'isolement étant en position ouverte lorsque le commutateur de mode (38, 40, 42) occupe le mode de régulation et d'étalonnage, et en position fermée lorsque le commutateur de mode occupe le mode de détection de fuite.

4. Banc d'essais selon l'une quelconque des revendications 2 et 3, caractérisé par le fait que les moyens d'affichage (34) du deuxième circuit pneumatique sont reliés au premier circuit pneumatique par l'intermédiaire d'un troisième moyen d'isolement (82), à commande électrique, qui se trouve en position ouverte lorsque le commutateur de mode (38, 40, 42) occupe le mode de régulation et d'étalonnage et en position fermée lorsque le commutateur de mode occupe le mode de détection de fuite.

5. Banc d'essais selon l 'une quelconque des revendications précédentes, caractérisé par le fait que les moyens de pompage comprennent une première pompe (44) fonctionnant en aspiration.

6. Banc d'essais selon la revendication 5, caractérisé par le fait que les moyens de pompage comprennent également une deuxième pompe (46), fonctionnant en refoulement, associée à des moyens de détection d'un seuil haut de pression statique, de telle sorte que cette deuxième pompe n'est actionnée, lorsque les moyens de commutation occupent le mode de régulation et d'étalonnage, qu'au-dessus dudit seuil.

7. Banc d'essais selon la revendication 6, caractérisé par le fait que la deuxième pompe (46) est reliée aux premier et au deuxième circuits pneumatiques au travers d'un quatrième moyen d'isolement (66), à commande électrique, qui se trouve en position ouverte lorsque la deuxième pompe est actionnée et en position fermée lorsque la deuxième pompe n'est pas actionnée.

8. Banc d'essais selon l'une quelconque des revendications 5 à 7, caractérisé par le fait que le premier circuit pneumatique est raccordé directement sur la première pompe (44), le deuxième circuit pneumatique étant raccordé au premier circuit pneumatique, en aval des moyens de réglage de ce premier circuit, au travers d'un moyen de dérivation (84) à commande électrique, lorsque la pression dynamique franchit un premier seuil dans le sens de la descente et un deuxième seuil dans le sens de la montée, et le deuxième circuit pneumatique étant raccordé directement à la première pompe, au travers dudit moyen de dérivation, lorsque la pression dynamique franchit le premier seuil dans le sens de la montée et le deuxième seuil dans le sens de la descente.

9. Banc d'essais selon l'une quelconque des revendications précédentes, caractérisé par le fait que des filtres interchangeables (62, 78) sont placés dans le premier et le deuxième circuits pneumatiques, en aval des moyens d'affichage (30, 34).

10. Banc d'essais selon l'une quelconque des revendications précédentes, caractérisé par le fait que les moyens d'alimentation électrique de l'appareil comprennent un câble d'alimentation électrique (12) apte àêtre raccordé sur une source de courant de l'aéronef, ou extérieure.

## Patentansprüche

1. Windmessprüfstand für die Detektierung und Lokalisierung von eventuellen Lecks in einen Windmesserkreis eines Flugzeuges mit mindestens einer Sonde für den statischen Druck (PS1 bis PS5) und mindestens einer Sonde für den dynamischen Druck (PD1 bis PD3) und zur Kontrolle der richtigen Eichung von Anzeigeeinrichtungen des Flugzeuges, die mit diesen Kreisen verbunden sind, wobei der Prüfstand **gekennzeichnet** ist durch ein tragbares Gerät (10), eine elektrische Versorgungseinrichtung (12) für dieses Gerät, zwei Schläuchen (16, 18) zur Verbindung dieses Gerätes jeweils mit den Sonden für den statischen Druck bzw. den dynamischen Druck umfassend eine erste elektrisch gesteuerte Isoliereinrichtung (EVS 1 - EVS 5; EVD 1 - EVD 3) für jede dieser Drucksonden und Kabeln (18), welche jede Isoliereinrichtung mit dem Gerät verbinden, wobei das Letztere umfaßt:
- eine elektrisch angetriebene Pumpeinrichtung (44,46);
- einen ersten pneumatischen Kreis zur Verbindung der Pumpeinrichtung mit der Schlauchverbindung (14) des Gerätes mit der Sonde für den statischen Druck über eine Steuereinrichtung (44) und eine Anzeigeeinrichtung (30) für einen Unterdruck in diesem ersten Kreis;
- einen zweiten pneumatischen Kreis, der die Pumpeinrichtung mit der Schlauchverbindung (16) des Gerätes mit der Sonde für den dynamischen Druck über eine Regeleinrichtung (68) und eine Anzeigeeinrichtung (34) für einen relativen Überdruck in bezug zu dem Unterdruck die den zweiten Kreis verbindet;
- eine Umschalteinrichtung (38, 40, 42; IS1 bis IS5; ID1 bis ID3), mit welcher der Prüfstand von einer Steuerbetriebsart in eine Eichbetriebsart umgeschaltet werden kann, in welcher die Pumpeinrichtung betrieben ist und alle ersten Isoliereinrichtungen in offener Stellung sind, zu einer Betriebsart der Detektion und Lokalisierung eines Lecks, in welchem die Pumpeinrichtung in Ruhe ist und mindestens die ersten Isoliereinrichtungen in geschlossener Stellung sind.

2. Prüfstand nach Anspruch 1, **dadurch gekennzeichnet**, daß die Umschalteinrichtung einen Betriebsartumschalter (38, 40, 42) umfaßt, mit dem die Betriebsart der Steuerung der Eichung und eine Betriebsart der Detektierung eines Lecks belegt werden kann, in welcher alle ersten Isoliereinrichtungen in geschlossener Stellung sind, und ein individueller Schalter (IS1 - IS5, ID1 - ID3), der die Schließung der ersten Isoliereinrichtung erlaubt, wenn der Betriebsartumschalter die Betriebsart des Steuerns und des Eichens belegt.

3. Prüfstand nach Anspruch 2, **gekennzeichnet durch** eine zweite elektrisch gesteuerte Isoliereinrichtung (60, 76), die in dem ersten und dem zweiten pneumatischen Kreis zwischen der Steuereinrichtung (54, 68) und der Anzeigeeinrichtung (32, 34) vorgesehen ist, wobei die zweite Isoliereinrichtung in offener Stellung ist, wenn der Betriebsartumschalter (38, 40, 42) die Steuer- und Eichbetriebsart belegt und in einer geschlossenen Stellung ist, wenn der Betriebsartumschalter die Betriebsart der Detektierung von Lecks einnimmt.

4. Prüfstand nach einem der Ansprüche 2 und 3, **dadurch gekennzeichnet**, daß die Anzeigeeinrichtung (34) des zweiten pneumatischen Kreises mit dem ersten pneumatischen Kreis über eine dritte elektrisch angetriebene Isoliereinrichtung (82) verbunden ist, die sich in einer offenen Stellung befindet, wenn der Betriebsartumschalter (38, 40, 42) die Betriebsart der Steuerung und Eichung einnimmt und in einer geschlossenen Stellung ist, wenn der Betriebsartumschalter die Betriebsart der Detektierung von Lecks einnimmt.

5. Prüfstand nach einem der vorangegangenen Ansprüche,**dadurch gekennzeichnet**, daß die Pumpeinrichtung eine erste Saugpumpe (44) umfaßt.

6. Prüfstand nach Anspruch 5, **dadurch gekennzeichnet**, daß die Pumpeinrichtung weiterhin eine zweite Förderpumpe (46) umfaßt, die mit einer Einrichtung zur Detektierung einer oberen Schwelle des statistischen Drucks verbunden ist, in der Weise, daß die zweite Pumpe nur über der Schwelle betätigt ist, wenn die Umschalteinrichtung die Steuer- und Eichbetriebsart einnehmen.

7. Prüfstand nach Anspruch 6, **dadurch gekennzeichnet**, daß die zweite Pumpe (46) mit den ersten und zweiten pneumatischen Kreisen über eine vierte elektrisch betriebene Isoliereinrichtung (66) verbunden ist, die sich in einer Offenstellung befindet, wenn die zweite Pumpe betätigt wird, und in einer geschlossenen Stellung ist, wenn die zweite Pumpe nicht betätigt wird.

8. Prüfstand nach einem der Ansprüche 1 - 7, **dadurch gekennzeichnet**, daß der erste pneumatische Kreis direkt mit der ersten Pumpe (44) verbunden ist, der zweite pneumatische Kreis mit dem ersten pneumatischen Kreis verbunden ist, Fluß abwärts von der Steuerung des ersten Kreises und über eine elektrisch betriebene Abzweigeinrichtung (84), wenn der dynamische Druck eine erste Schwelle in absteigender Richtung überschreitet und eine zweite Schwelle in aufsteigender Richtung überschreitet, und der zweite pneumatische Kreis direkt mit der ersten Pumpe über die Abzweigeinrichtung verbunden ist, wenn der dynamische Druck die erste Schwelle in steigender Richtung überschreitet und die zweite Schwelle in fallender Richtung überschreitet.

9. Prüfstand nach einem der vorangegangenen Ansprüche, **dadurch gekennzeichnet**, daß austauschbare Filter (62, 78) in dem ersten und dem zweiten pneumatischen Kreis Strom abwärts von der Anzeigeeinrichtung (30, 34) vorgesehen sind.

10. Prüfstand nach einem der vorangegangenen Ansprüche, **dadurch gekennzeichnet**, daß die elektrische Versorgungseinrichtung des Gerätes ein elektrisches Versorgungskabel (12) umfaßt, das mit einer Stromquelle des Flugzeuges oder extern verbunden werden kann.

## Claims

1. Anemometric test bench for detecting and locating any leaks in an aircraft anemometric circuit including at least one static pressure inlet (PS1 to PS5) and at least one dynamic pressure inlet (PD1 to PD3) and for checking the correct calibration of the aircraft instruments connected to these circuits, this test bench being characterized by the fact that it comprises a portable appliance (10), means for supplying electrical power (12) to this appliance, two pipes (16, 18) connecting the appliance respectively to the static and dynamic pressure inlets, incorporating a first electrically-controlled isolation means (EVS1 to EVS5; EVD1 to EVD3) for each of these pressure inlets, and cables (18) electrically connecting each isolation means to the appliance, the latter comprising:
- electrically-driven pumping means (44, 46);
- a first pneumatic circuit connecting the pumping means to the pipe (14) connecting the appliance to the static pressure inlet, through means for regulating (54) and means for displaying (30) negative pressure in this first circuit;
- a second pneumatic circuit connecting the pumping means to the pipe (16) connecting the appliance to the dynamic pressure inlet through means for regulating (68) and means for displaying (34) relative overpressure in this second circuit, with respect to the said negative pressure;
- switching means (38, 40, 42; IS1 to IS5; ID1 to ID3) enabling the test bench to change from a regulation and calibration mode, in which the pumping means are activated and all the first isolation means are in the open position, to a leak detection and location mode, in which the pumping means are idle and at least one of the first isolation means is in the closed position.

2. Test bench according to Claim 1, characterized by the fact that the switching means comprise a mode switch (38, 40, 42) able to be in the regulation and calibration mode and a leak detection mode, in which all the first isolation means are in the closed position, and an individual switch (IS1 to IS5, ID1 to ID3) enabling each of the first isolation means to be closed when the mode switch is in the regulation and calibration mode.

3. Test bench according to Claim 2, characterized by the fact that the second electrically-controlled isolation means (60, 76) are positioned in each of the first and second pneumatic circuits between the regulation means (54, 68) and the display means (30, 34), these second isolation means being in the open position when the mode switch (38, 40, 42) is in the regulation and calibration mode, and in the closed position when the mode switch is in the leak detection mode.

4. Test bench according to either one of Claims 2 and 3, characterized by the fact that the display means (34) of the second pneumatic circuit are connected to the first pneumatic circuit by means of a third electrically-controlled isolation means (82) which is in the open position when the mode switch (38, 40, 42) is in the regulation and calibration mode and in the closed position when the mode switch is in the leak detection mode.

5. Test bench according to any one of the preceding claims, characterized by the fact that the pumping means comprise a first pump (44) operating by suction.

6. Test bench according to Claim 5, characterized by the fact that the pumping means also comprise a second pump (46) operating by pressure, associated with means for detecting a high static-pressure threshold, so that, when the switching means are in the regulation and calibration mode, this second pump is activated only above the said threshold.

7. Test bench according to Claim 6, characterized by the fact that the second pump (46) is connected to the first and second pneumatic circuits through a fourth electrically-controlled isolation means (66), which is in the open position when the second pump is activated and in a closed position when the second pump is not activated.

8. Test bench according to any one of Claims 5 to 7, characterized by the fact that the first pneumatic circuit is connected directly to the first pump (44), the second pneumatic circuit being connected to the first pneumatic circuit, downstream of the means for regulating this first circuit, through an electrically-controlled diversion means (84), when the dynamic pressure passes a first threshold in a downward direction and a second threshold in the upward direction, and the second pneumatic circuit being connected directly to the first pump, through the said diversion means, when the dynamic pressure passes the first threshold in the upward direction and the second threshold in the downward direction.

9. Test bench according to any one of the preceding claims, characterized by the fact that exchangeable filters (62, 78) are placed in the first and second pneumatic circuits, downstream of the display means (30, 34).

10. Test bench according to any one of the preceding claims, characterized by the fact that the electrical power supply means for the appliance comprise an electrical power supply cable (12) suitable for being connected to a source of current on the aircraft, or an external source.
